# EUROPÄISCHE PATENTSCHRIFT

(11) **EP 3 472 818 B1**
(45) Veröffentlichungstag und Bekanntmachung des Hinweises auf die Patenterteilung: **27.12.2023**
(21) Anmeldenummer: 17721714.8
(22) Anmeldetag: 08.05.2017
(51) Int. Cl.: G08G 1/14, B62D 15/02

(54) **KONZEPT ZUM STEUERN EINES VERKEHRS INNERHALB EINES PARKPLATZES**
CONCEPT FOR CONTROLLING TRAFFIC IN A CAR PARK
CONCEPT DE COMMANDE D'UNE CIRCULATION À L'INTÉRIEUR D'UN PARC DE STATIONNEMENT

(30) Priorität: 17.06.2016 DE 102016210886
(43) Veröffentlichungstag der Anmeldung: 24.04.2019
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2017/060914
(87) Internationale Veröffentlichungsnummer: WO 2017/215841

(56) Entgegenhaltungen:
- EP-A1- 2 747 053
- EP-A1- 3 029 602
- EP-B1- 2 082 386
- WO-A1-2016/030854
- DE-A1-102011 103 743
- DE-A1-102014 211 557
- US-A1- 2006 250 278
- US-A1- 2013 262 059
- US-A1- 2015 123 818
- US-A1- 2015 248 835
- US-B1- 8 692 688
- Christian Löper ET AL: "Automated Valet Parking as Part of an Integrated Travel Assistance", Proceedings of the 16th International IEEE Annual Conference on Intelligent Transportation Systems (ITSC 2013), 6 October 2013 (2013-10-06), pages 2341-2348, XP055439565, DOI: 10.1109/ITSC.2013.6728577 Retrieved from the Internet: URL:http://ieeexplore.ieee.org/ielx7/67121 76/6728201/06728577.pdf [retrieved on 2018-01-10]

## Beschreibung

Die Erfindung betrifft ein Verfahren zum Steuern eines Verkehrs innerhalb eines Parkplatzes. Die Erfindung betrifft ferner eine Vorrichtung zum Steuern eines Verkehrs innerhalb eines Parkplatzes. Die Erfindung betrifft des Weiteren einen Parkplatz für Kraftfahrzeuge. Die Erfindung betrifft ein Computerprogramm.

### Stand der Technik

Die Offenlegungsschrift EP 2 747 053 A1 offenbart ein System zur Ermittlung eines Belegungsgrades einer Stellplätze für Fahrzeuge aufweisenden Parkzone.

Die Offenlegungsschrift DE 10 2014 211 557 A1 offenbart ein Valet Parking Verfahren und System.

Die Offenlegungsschrift DE 10 2011 103 743 A1 offenbart ein Verfahren und eine Vorrichtung zur Umgebungserfassung eines Fahrzeugs.

Die Offenlegungsschrift US 2006/0250278 A1 offenbart ein System und ein Verfahren zum Erfassen eines Belegungszustandes eines Stellplatzes.

Die Offenlegungsschrift EP 3 029 602 A1 offenbart ein Verfahren und eine Vorrichtung zum Detektieren eines freien Fahrraums.

Die Offenlegungsschrift DE 10 2013 211 126 A1 zeigt ein Verfahren zum Modellieren eines Umfelds eines Fahrzeugs. Das Umfeld kann zum Beispiel ein Parkhaus sein.

Die Offenlegungsschrift DE 10 2012 222 562 A1 zeigt ein System für bewirtschaftete Parkflächen zur Überführung eines Fahrzeugs von einer Startposition in eine Zielposition. Das Fahrzeug fährt führerlos während des Überführens. Wenn innerhalb eines Parkplatzes sowohl führerlos fahrende Fahrzeuge als auch manuell geführte Fahrzeuge gleichzeitig fahren, so besteht ein Bedarf für eine effiziente Steuerung eines entsprechenden Verkehrs.

### Offenbarung der Erfindung

Die der Erfindung zugrundeliegende Aufgabe ist darin zu sehen, ein Konzept zum effizienten Steuern eines Verkehrs innerhalb eines Parkplatzes bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Die Erfindung basiert auf der Erkenntnis, dass die obige Aufgabe dadurch gelöst werden kann, dass durch das Unterteilen des Parkplatzes in mehrere Kacheln und das Ermitteln des jeweiligen Belegungszustands der Kacheln der Parkplatz effizient dahingehend überwacht werden kann, wo sich Teilnehmer des Verkehrs befinden, so dass die Überwachung als Basis für eine Steuerung des Verkehrs verwendet werden kann. Somit wird also der technische Vorteil bewirkt, dass der Verkehr effizient gesteuert werden kann.

Das Unterteilen in Kacheln weist insbesondere den technischen Vorteil auf, dass Kacheln besonders effizient überwacht werden können. Zum Beispiel reicht es aus, Ränder der Kacheln zu überwachen, zum Beispiel mittels Lichtschranken, um detektieren, ob ein Objekt die Kachel verlässt oder diese betrifft respektive befährt.

Das Unterteilen der Kacheln weist ferner den Vorteil auf, dass Kacheln in der Regel einfacher zu überwachen sind als ein gesamter Bereich um das Kraftfahrzeug. Zum Beispiel kann es ausreichen, nur die Grenzen der Kacheln zu überwachen, beispielsweise mittels Lichtschranken, anstelle der gesamten Kachel. So können also noch über abstandsmessende Sensoren, wie beispielsweise Radarsensoren oder Ultraschallsensoren, weitere Sensoren, hier beispielsweise Lichtschranken, für die Überwachung der Kacheln verwendet werden.

Weiter können notwendige Berechnungen in Kacheleinheiten durchgeführt werden, so dass nicht mehr unbedingt Abstände Objekt-Kraftfahrzeug benötigt werden.

Ein Parkplatz im Sinne der vorliegenden Erfindung kann auch als eine Parkfläche bezeichnet werden und dient als Abstellfläche für Kraftfahrzeuge. Der Parkplatz bildet somit insbesondere eine zusammenhängende Fläche, die mehrere Stellplätze (bei einem Parkplatz auf privatem Grund) oder Parkstände (bei einem Parkplatz auf öffentlichem Grund) aufweist. Der Parkplatz ist nach einer Ausführungsform als ein Parkhaus ausgebildet. Der Parkplatz ist nach einer Ausführungsform als eine Parkgarage ausgebildet.

Gemäß der beanspruchten Erfindung ist vorgesehen, dass basierend auf den Umfeldsensordaten ein jeweiliger Belegungszustand einer oder mehrerer der Kacheln prädiziert wird, wobei der Verkehr ferner basierend auf dem jeweiligen prädizierten Belegungszustand gesteuert wird.

Dadurch wird insbesondere der technische Vorteil bewirkt, dass der Verkehr effizient gesteuert werden kann, insofern eine Vorhersage für einen zukünftigen Belegungszustand (Prädiktion) mit als Basis für die Verkehrssteuerung verwendet wird.

Das Prädizieren umfasst nach einer Ausführungsform, dass eine Bewegung eines mittels eines Umfeldsensors erfassten Objekts prädiziert wird. Zum Beispiel umfasst das Prädizieren, dass ein Bewegungsprofil eines Objekts, welches mittels eines Umfeldsensors erfasst wurde, erstellt oder ermittelt wird.

Das heißt also insbesondere, dass eine Bewegung eines Objekts über eine Zeit prädiziert wird.

Zum Beispiel umfasst das Prädizieren, dass eine Aussage getroffen wird, dass eine bestimmte Kachel, die momentan belegt ist, in einer basierend auf der Prädiktion ermittelten Zeit, zum Beispiel 30 Sekunden, frei sein wird.

Basierend auf dieser Aussage wird dann nach einer Ausführungsform die Verkehrssteuerung, also die Steuerung des Verkehrs, durchgeführt.

Das heißt gemäß der beanspruchten Erfindung, dass das Prädizieren eines jeweiligen Belegungszustands einer oder mehrerer der Kacheln nach einer Ausführungsform umfasst, dass bei einer momentan belegten Kachel ermittelt wird, wann diese wieder frei sein wird. Diese Information, also der Zeitpunkt, an dem eine momentan belegte Kachel wieder frei sein wird, wird dann für das Steuern des Verkehrs verwendet.

Das heißt gemäß der beanspruchten Erfindung, dass das Prädizieren eines jeweiligen Belegungszustands einer oder mehrerer der Kacheln nach einer Ausführungsform umfasst, dass bei einer momentan freien Kachel ermittelt wird, wann diese wieder belegt sein wird. Diese Information, also der Zeitpunkt, an dem eine momentan freie Kachel wieder belegt sein wird, wird dann für das Steuern des Verkehrs verwendet.

Nach einer Ausführungsform ist vorgesehen, dass der eine oder die mehreren Umfeldsensoren einen oder mehrere Umfeldsensoren eines sich innerhalb des Parkplatzes befindenden Kraftfahrzeugs und/oder einen oder mehrere Umfeldsensoren des Parkplatzes umfassen.

Dadurch wird insbesondere der technische Vorteil bewirkt, dass die Kacheln effizient überwacht werden können.

Das heißt also insbesondere, dass zum Beispiel eine oder mehrere der Kacheln mittels eines oder mehrerer Umfeldsensoren eines sich innerhalb des Parkplatzes befindenden Kraftfahrzeugs erfasst oder überwacht werden. Bei einem solchen Kraftfahrzeug handelt es sich zum Beispiel um ein abgestelltes, also insbesondere um ein parkendes, Kraftfahrzeug oder zum Beispiel um ein innerhalb des Parkplatzes fahrendes Kraftfahrzeug. Ein innerhalb des Parkplatzes fahrendes Kraftfahrzeug ist zum Beispiel ein mittels eines menschlichen Fahrers geführtes Kraftfahrzeug oder ein führerlos fahrendes Kraftfahrzeug, zum Beispiel ein ferngesteuertes Kraftfahrzeug oder ein autonom fahrendes Kraftfahrzeug. Das heißt also insbesondere, dass die eine oder die mehreren Kacheln mittels eines oder mehrerer Umfeldsensoren überwacht werden, die zu einer Infrastruktur des Parkplatzes gehören.

Zum Beispiel ist vorgesehen, dass an Infrastrukturelementen des Parkplatzes, zum Beispiel Säulen, Wänden oder Decken, Umfeldsensoren angeordnet sind.

Insbesondere wenn sowohl Umfeldsensoren des Parkplatzes als auch Umfeldsensoren des Kraftfahrzeugs für das Erfassen der Kacheln verwendet werden, können eine besonders genaue Erfassung der Kacheln und somit eine besonders genaue Überwachung der Kacheln und somit letztlich des Parkplatzes bewirkt werden.

Zum Beispiel ist nach einer Ausführungsform vorgesehen, dass die Vorrichtung Umfeldsensordaten von einem oder mehreren Umfeldsensoren des Kraftfahrzeugs über ein Kommunikationsnetzwerk empfängt. Das heißt also insbesondere, dass ein sich innerhalb des Parkplatzes befindendes Kraftfahrzeug mittels seines oder mittels seiner Umfeldsensoren sein eigenes Umfeld erfasst und die entsprechenden Umfeldsensordaten an die Vorrichtung sendet.

Die Vorrichtung umfasst nach einer Ausführungsform eine Kommunikationsschnittstelle, die ausgebildet ist, Umfeldsensordaten eines sich innerhalb des Parkplatzes befindenden Kraftfahrzeugs zu empfangen.

Nach einer Ausführungsform umfasst ein Kommunikationsnetzwerk im Sinne der vorliegenden Erfindung ein Mobilfunkkommunikationsnetzwerk und/oder ein WLAN-Kommunikationsnetzwerk.

In einer Ausführungsform ist vorgesehen, dass der Verkehr ferner basierend auf einem jeweiligen historischen Belegungszustand einer oder mehrerer der Kacheln gesteuert wird, der jeweils einen Belegungszustand der entsprechenden Kachel in der Vergangenheit angibt.

Dadurch wird insbesondere der technische Vorteil bewirkt, dass der Verkehr effizient gesteuert werden kann. Zum Beispiel ist vorgesehen, dass basierend auf den jeweiligen historischen Belegungszuständen ermittelt wird, wann eine Kachel zu einem bestimmten zukünftigen Zeitpunkt belegt oder unbelegt ist.

Zum Beispiel ist nach einer Ausführungsform vorgesehen, dass das Prädizieren, wie vorstehend beschrieben, basierend auf dem jeweiligen historischen Belegungszustand durchgeführt wird.

Dadurch wird insbesondere der technische Vorteil bewirkt, dass die Prädiktion effizient durchgeführt werden kann.

Ein historischer Belegungszustand einer Kachel bezeichnet insbesondere einen Belegungszustand der Kachel zu einem bestimmten Zeitpunkt, der in der Vergangenheit liegt, also einen vergangenen Zeitpunkt.

Basierend auf den historischen Belegungszuständen wird zum Beispiel eine Wahrscheinlichkeit für einen jeweiligen Belegungszustand von einer oder von mehreren Kacheln für die Zukunft ermittelt. Zum Beispiel wird basierend auf den historischen Belegungszuständen ermittelt, dass zu einem bestimmten Tag respektive zu einer bestimmten Uhrzeit eine bestimmte Kachel mit einer bestimmten Wahrscheinlichkeit belegt oder unbelegt ist. Zum Beispiel wird basierend auf den historischen Belegungszuständen ermittelt, dass an einem bestimmten Tag respektive einer bestimmten Uhrzeit eine Tür oder ein Tor, welche(s) unmittelbar benachbart zu einer bestimmten Kachel angeordnet ist, mit einer bestimmten Wahrscheinlichkeit geöffnet wird, zum Beispiel alle drei Minuten geöffnet wird, allgemein zum Beispiel mit einer bestimmten Frequenz geöffnet wird. Diese vorstehend bezeichneten Ergebnisse des entsprechenden Ermittelns werden vorzugsweise für das Steuern des Verkehrs verwendet.

Gemäß einer Ausführungsform ist vorgesehen, dass das Steuern des Verkehrs frei von einer Verwendung von einem oder mehreren der folgenden Parameter ist: Metadaten, insbesondere Höhe und/oder Breite und/oder Länge und/oder Typ, eines erfassten Kraftfahrzeugs, Typ eines erfassten Objekts, Abstand zwischen zwei erfassten Objekten.

Dadurch wird insbesondere der technische Vorteil bewirkt, dass das Steuern besonders effizient, was einen Rechenaufwand angeht, durchgeführt werden kann. Somit kann zum Beispiel in effizienter Weise Rechenzeit eingespart werden.

Dass das Steuern des Verkehrs frei von einer Verwendung von einem oder mehreren der Parameter ist, heißt also insbesondere, dass für das Steuern des Verkehrs diese Parameter nicht berücksichtigt werden. Sie fließen also nicht in eine entsprechende Berechnung ein.

Ein Typ eines erfassten Objekts ist zum Beispiel: Kraftfahrzeug, Fußgänger, Radfahrer oder Tier.

Das heißt also, dass das erfasste Objekt klassifiziert wird.

Insbesondere wenn davon abgesehen wird, den Abstand zwischen zwei erfassten Objekten für das Steuern zu verwenden, kann somit auch in vorteilhafter Weise davon abgesehen werden, den entsprechenden Abstand zu ermitteln. Für ein solches Ermitteln sind in der Regel Umfeldsensoren notwendig, die Distanzen zu einem Objekt ermitteln können. Solche Umfeldsensoren sind zum Beispiel Radarsensoren oder Ultraschallsensoren.

Somit können also für die Überwachung der Kacheln auch Umfeldsensoren verwendet werden, die keine Distanzmessung erlauben. Solche Umfeldsensoren sind zum Beispiel Lichtschrankensensoren oder Drucksensoren. Somit können also in vorteilhafter Weise mehrere unterschiedliche Sensortechnologien verwendet werden, um die Kacheln zu überwachen.

In einer Ausführungsform ist vorgesehen, dass der Verkehr ausschließlich basierend auf jeweiligen Belegungszuständen der Kacheln gesteuert wird.

Dadurch wird insbesondere der technische Vorteil bewirkt, dass der Verkehr effizient gesteuert werden kann. Insbesondere kann dadurch in effizienter Weise eine entsprechende Rechenzeit eingespart werden. Somit kann zum Beispiel in vorteilhafter Weise auf unvorhergesehene Ereignisse effizient und mit einer kurzen Reaktionszeit reagiert werden.

Dadurch kann zum Beispiel ein Kollisionsrisiko vermindert werden.

Dass der Verkehr ausschließlich basierend auf jeweiligen Belegungszuständen der Kacheln gesteuert wird, ermöglicht es in vorteilhafter Weise, dass lediglich der Belegungszustand der Kacheln ermittelt werden muss. Das heißt also insbesondere, dass nach einer Ausführungsform vorgesehen ist, dass basierend auf den Umfeldsensordaten ausschließlich ein Belegungszustand der Kacheln ermittelt wird. Es steht also somit lediglich die Information zur Verfügung, ob eine Kachel belegt oder unbelegt ist. Es steht aber zum Beispiel nicht die Information zur Verfügung, wie groß das Objekt ist, welches eine Kachel belegt, oder was für ein Typ das Objekt ist, welches die Kachel belegt.

Doch für eine effiziente Steuerung des Verkehrs reicht es in der Regel aus, lediglich den Belegungszustand der Kacheln zu kennen und zu verwenden. Die Information, dass sich auf einer Kachel ein bestimmtes Kraftfahrzeug mit bestimmten Maßen befindet, ist in der Regel für eine effiziente Steuerung des Verkehrs nicht notwendig und verlängert und verkompliziert üblicherweise entsprechende Berechnungen, die notwendig sind, um den Verkehr zu steuern.

Nach einer Ausführungsform ist vorgesehen, dass eine oder mehrere der Kacheln jeweils eine Breite einer Fahrspur des Parkplatzes aufweisen.

In einer Ausführungsform ist vorgesehen, dass eine oder mehrere der Kacheln jeweils eine Länge zwischen 0,75 m und 1,5 m, insbesondere eine Länge von 1 m, aufweisen.

Dadurch wird insbesondere der technische Vorteil bewirkt, dass eine Fahrspur des Parkplatzes effizient überwacht werden kann, so dass darüber ein Verkehr innerhalb dieser Fahrspur effizient gesteuert werden kann.

Eine Fahrspur ist zum Beispiel mittels Begrenzungslinien, zum Beispiel gestrichelter Begrenzungslinien, von ihrer Umgebung abgegrenzt.

Gemäß einer Ausführungsform ist vorgesehen, dass eine oder mehrere der Kacheln jeweils einem Stellplatz, insbesondere einer Parkbucht, entsprechen.

Dadurch wird insbesondere der technische Vorteil bewirkt, dass der Stellplatz, insbesondere die Parkbucht, effizient überwacht werden kann.

Ein Stellplatz, insbesondere eine Parkbucht, ist zum Beispiel mittels einer oder mehrerer Linien, insbesondere gestrichelter Linien, von seiner/ihrer Umgebung abgegrenzt.

Gemäß einer Ausführungsform ist vorgesehen, dass die Kacheln jeweils eine der folgenden Formen aufweisen: Quadrat, Rechteck, Kreis, Ellipse.

Durch diese Formvielfalt wird insbesondere der technische Vorteil bewirkt, dass der Parkplatz effizient unterteilt werden kann.

In einer Ausführungsform ist vorgesehen, dass eine jeweilige Größe der Kacheln abhängig von einem oder von mehreren der folgenden Parameter ausgewählt wird: Anzahl an Umfeldsensoren, Detektionsgenauigkeit des oder der Umfeldsensoren, Objektgeschwindigkeit eines erfassten Objekts.

Dadurch wird insbesondere der technische Vorteil bewirkt, dass die Größe für die Kacheln effizient ausgewählt werden kann.

Nach einer Ausführungsform sind die mehreren Kacheln unterschiedlich oder identisch ausgebildet. So ist zum Beispiel vorgesehen, dass die mehreren Kacheln alle eine gleiche Größe aufweisen. Zum Beispiel ist vorgesehen, dass die mehreren Kacheln jeweils unterschiedliche Größen aufweisen. Zum Beispiel ist vorgesehen, dass die mehreren Kacheln teilweise identisch und teilweise unterschiedlich ausgebildet sind. Das heißt also insbesondere, dass einige der Kacheln jeweils eine gleiche Größe aufweisen können, wohingegen andere der Kacheln jeweils eine unterschiedliche Größe aufweisen.

Nach einer Ausführungsform ist vorgesehen, dass die mehreren Kacheln jeweils eine Größe von 1 m mal 2 m oder von 1 m mal 1 m aufweisen. Zum Beispiel wird abhängig von dem oder den vorstehend bezeichneten Parametern zwischen der Größe 1 m mal 2 m und der Größe 1 m mal 1 m ausgewählt.

Dadurch wird insbesondere der technische Vorteil bewirkt, dass der Parkplatz effizient in übliche Kraftfahrzeugabmessungen unterteilt ist.

Nach einer Ausführungsform ist vorgesehen, dass das Steuern des Verkehrs eine oder mehrere der folgenden Aktionen umfasst: Fernsteuern eines Kraftfahrzeugs, Ermitteln einer von einem Kraftfahrzeug autonom abzufahrenden Soll-Trajektorie und Senden der ermittelten Soll-Trajektorie an das Kraftfahrzeug, Steuern eines Signalgebers und/oder einer Schranke des Parkplatzes, Ermitteln einer Startzeit für eine Durchführung eines führerlosen Überführens eines Kraftfahrzeugs von einer Startposition innerhalb des Parkplatzes zu einer Zielposition innerhalb des Parkplatzes.

Das Fernsteuern eines Kraftfahrzeugs umfasst insbesondere, dass ein oder mehrere Fernsteuerungsbefehle über ein Kommunikationsnetzwerk an das Kraftfahrzeug gesendet werden.

Das Kraftfahrzeug wird also zum Beispiel mittels der Vorrichtung ferngesteuert. Die Vorrichtung umfasst zum Beispiel hierfür eine Fernsteuerungseinrichtung zum Fernsteuern eines Kraftfahrzeugs.

Durch das Steuern eines Signalgebers respektive einer Schranke des Parkplatzes kann zum Beispiel in effizienter Weise ein Teilnehmer des Verkehrs zum Anhalten oder zum Weiterfahren aufgefordert werden.

Ein Signalgeber ist zum Beispiel ein optischer Signalgeber. Ein Signalgeber ist zum Beispiel ein akustischer Signalgeber. Ein Signalgeber ist zum Beispiel von einer Lichtsignalanlage umfasst. Zum Beispiel sind mehrere Signalgeber vorgegeben, die beispielsweise gleich oder unterschiedlich ausgebildet sind.

Zum Beispiel sind mehrere Schranken vorgesehen. Durch das Steuern einer Schranke kann zum Beispiel in effizienter Weise ein Teilnehmer eines Verkehrs zum Anhalten gezwungen werden respektive zum Weiterfahren aufgefordert werden, abhängig davon, ob die Schranke geschlossen oder geöffnet ist.

Das heißt also, dass das Steuern einer Schranke ein Schließen oder ein Öffnen der Schranke umfasst.

Eine Startposition innerhalb des Parkplatzes bezeichnet zum Beispiel eine Abgabeposition, an welcher ein Fahrer sein Kraftfahrzeug abstellen kann respektive abgestellt hat, damit das Kraftfahrzeug anschließend automatisch parkt. In diesem Fall ist die Zielposition insbesondere eine Parkposition innerhalb des Parkplatzes, also insbesondere ein Stellplatz, beispielsweise eine Parkbucht.

Eine Startposition ist nach einer Ausführungsform eine Parkposition, insbesondere ein Stellplatz, beispielsweise eine Parkbucht. Das Kraftfahrzeug ist also auf der Parkposition abgestellt, parkt also an dieser oder auf dieser. In dieser Ausführungsform ist dann vorgesehen, dass das Kraftfahrzeug führerlos von der Parkposition zu einer Abholposition, also die Zielposition, geführt wird. Die Abholposition ist eine Position innerhalb des Parkplatzes, an welcher eine Person das Kraftfahrzeug abholen kann respektive abholen will.

Nach einer Ausführungsform umfasst das Steuern des Verkehrs ein führerloses Überführen eines Kraftfahrzeugs von einer Startposition, bei der es sich zum Beispiel um eine der vorstehend bezeichneten Startpositionen handeln kann, zu einer Zielposition, bei der es sich zum Beispiel um eine der vorstehend bezeichneten Zielpositionen handeln kann, innerhalb des Parkplatzes.

Ein Objekt im Sinne dieser Beschreibung ist zum Beispiel ein Kraftfahrzeug, ein Fußgänger, ein Radfahrer oder ein Tier. Wenn der Singular für das Objekt verwendet ist, soll stets der Plural mitgelesen werden und umgekehrt. Bei mehreren Objekten sind diese zum Beispiel gleich oder unterschiedlich.

Nach einer Ausführungsform ist vorgesehen, dass das Verfahren mittels der Vorrichtung durchgeführt wird. Vorrichtungsmerkmale ergeben sich analog aus entsprechenden Verfahrensmerkmalen und umgekehrt. Das heißt also insbesondere, dass sich technische Funktionalitäten des Verfahrens analog aus entsprechenden technischen Funktionalitäten der Vorrichtung und umgekehrt ergeben.

Nach einer Ausführungsform umfasst die Vorrichtung eine Kommunikationsschnittstelle, die ausgebildet ist, mit einem Kraftfahrzeug über ein Kommunikationsnetzwerk zu kommunizieren.

In einer weiteren Ausführungsform umfasst die Vorrichtung einen Prozessor, der ausgebildet ist, einen jeweiligen Belegungszustand der mehreren Kacheln basierend auf den Umfeldsensordaten zu ermitteln.

Nach einer Ausführungsform ist vorgesehen, dass der Prozessor ausgebildet ist, einen Verkehr innerhalb des Parkplatzes basierend auf den ermittelten Belegungszuständen zu steuern.

Nach einer Ausführungsform ist vorgesehen, dass der Prozessor ausgebildet ist, den Parkplatz in mehrere Kacheln zu unterteilen.

Ein Umfeldsensor im Sinne der vorliegenden Erfindung ist zum Beispiel einer der folgenden Umfeldsensoren: Radarsensor, Lidarsensor, Lasersensor, Videosensor, insbesondere Videosensor einer Videokamera, Ultraschallsensor, Magnetsensor, Infrarotsensor, Drucksensor, Bewegungsmelder und Lichtschrankensensor.

In einer Ausführungsform ist ein oder sind mehrere der vorstehend bezeichneten Umfeldsensoren zum Erfassen respektive Überwachen der Kacheln vorgesehen.

In einer Ausführungsform umfasst der Parkplatz respektive die Vorrichtung einen oder mehrere der vorstehend bezeichneten Umfeldsensoren.

Nach einer Ausführungsform umfasst der Parkplatz eine Lichtschranke (Lichtschrankensensor). Nach einer Ausführungsform umfasst der Parkplatz als Umfeldsensor einen Drucksensor. Nach einer Ausführungsform umfasst der Parkplatz als Umfeldsensor einen Bewegungsmelder.

Bei mehreren Umfeldsensoren sind diese zum Beispiel gleich oder zum Beispiel unterschiedlich ausgebildet.

Nach einer Ausführungsform ist vorgesehen, dass, wenn sich ein Objekt in einer Kachel befindet, ein Aktuator eines Kraftfahrzeugs, zum Beispiel eine Bremse, in Bereitschaft versetzt wird. Im Fall einer Bremse bedeutet dies zum Beispiel, dass die Bremse voraktiviert wird. Dadurch kann eine Reaktionszeit effizient reduziert werden.

Nach einer Ausführungsform ist vorgesehen, dass, wenn sich ein Objekt in einer Kachel befindet, die Kacheln mittels zumindest eines weiteren Umfeldsensors überwacht werden, der bisher die Kacheln noch nicht überwacht hat. Dadurch wird zum Beispiel der technische Vorteil bewirkt, dass mittels der Überwachung durch den zumindest einen weiteren Umfeldsensor die Überwachung mittels der bisher verwendeten Umfeldsensoren effizient überprüft werden kann.

Die Formulierung "respektive" umfasst insbesondere die Formulierung "und/oder".

Die Erfindung wird im Folgenden anhand von bevorzugten Ausführungsbeispielen näher erläutert. Hierbei zeigen
- Fig. 1: ein Ablaufdiagramm eines Verfahrens zum Steuern eines Verkehrs innerhalb eines Parkplatzes,
- Fig. 2: eine Vorrichtung zum Steuern eines Verkehrs innerhalb eines Parkplatzes und
- Fig. 3: einen Parkplatz für Kraftfahrzeuge.

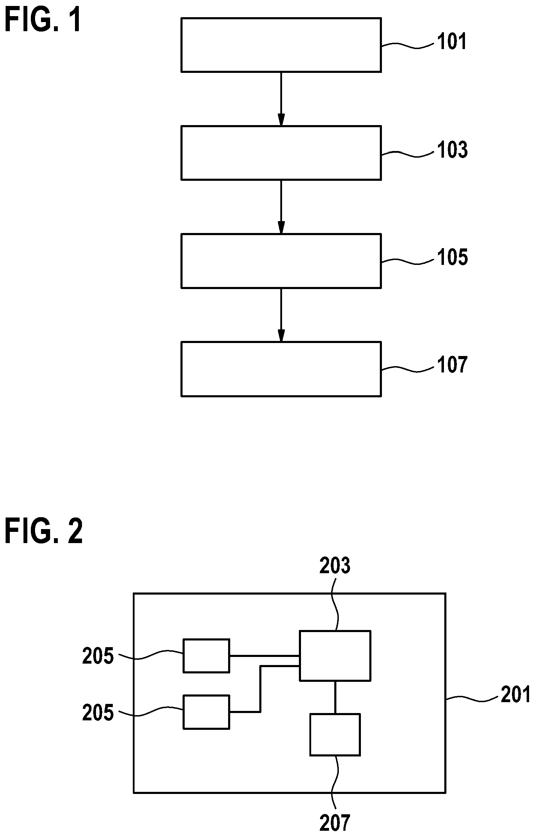

Fig. 1 zeigt ein Ablaufdiagramm eines Verfahrens zum Steuern eines Verkehrs innerhalb eines Parkplatzes.

Das Verfahren umfasst die folgenden Schritte:
- Unterteilen 101 des Parkplatzes in mehrere Kacheln,
- Erfassen 103 der mehreren Kacheln mittels eines oder mehrerer Umfeldsensoren, um der Erfassung entsprechende Umfeldsensordaten zu ermitteln,
- Ermitteln 105 eines jeweiligen Belegungszustands der mehreren Kacheln basierend auf den Umfeldsensordaten,
- Steuern 107 eines Verkehrs innerhalb des Parkplatzes basierend auf den ermittelten Belegungszuständen.

Fig. 2 zeigt eine Vorrichtung 201 zum Steuern eines Verkehrs innerhalb eines Parkplatzes.

Die Vorrichtung 201 ist ausgebildet, das Verfahren zum Steuern eines Verkehrs innerhalb eines Parkplatzes durchzuführen.

Die Vorrichtung 201 umfasst einen Prozessor 203, der ausgebildet ist, den Parkplatz in mehrere Kacheln zu unterteilen.

Die Vorrichtung 201 umfasst mehrere Umfeldsensoren 205, die ausgebildet sind, eine oder mehrere der mehreren Kacheln zu erfassen, also zu überwachen. Die Umfeldsensoren 205 sind ausgebildet, der Erfassung entsprechende Umfeldsensordaten zu ermitteln und an den Prozessor 203 zu senden.

Der Prozessor 203 ist ausgebildet, basierend auf den Umfeldsensordaten der Umfeldsensoren 205 einen jeweiligen Belegungszustand der mehreren Kacheln zu ermitteln. Der Prozessor 203 ist ferner ausgebildet, einen Verkehr innerhalb des Parkplatzes basierend auf den ermittelten Belegungszuständen zu steuern.

Zum Beispiel ist der Prozessor 203 ausgebildet, ein Kraftfahrzeug innerhalb des Parkplatzes fernzusteuern. Hierfür ist eine Kommunikationsschnittstelle 207 vorgesehen, die ausgebildet ist, einen der Fernsteuerung entsprechenden Fernsteuerungsbefehl an das Kraftfahrzeug über ein Kommunikationsnetzwerk zu senden.

Die Kommunikationsschnittstelle 207 ist zum Beispiel ausgebildet, über das Kommunikationsnetzwerk Umfeldsensordaten von einem oder von mehreren Umfeldsensoren von einem oder mehreren Kraftfahrzeugen, die sich innerhalb des Parkplatzes befinden, zu empfangen.

Die Kommunikationsschnittstelle 207 ist zum Beispiel ausgebildet, eine Soll-Trajektorie für ein Kraftfahrzeug über das Kommunikationsnetzwerk an das Kraftfahrzeug zu senden. Eine solche Soll-Trajektorie wird vorzugsweise mittels des Prozessors 203 ermittelt und ist insbesondere eine Soll-Trajektorie, die das Kraftfahrzeug autonom abfahren soll. Der Prozessor 203 ermittelt diese Soll-Trajektorie vorzugsweise basierend auf den ermittelten Belegungszuständen.

Zum Beispiel ermittelt der Prozessor 203 einen Startzeitpunkt oder eine Startzeit für eine Durchführung eines führerlosen Überführens eines Kraftfahrzeugs von einer Startposition innerhalb des Parkplatzes zu einer Zielposition innerhalb des Parkplatzes. Die Kommunikationsschnittstelle 207 ist vorzugsweise ausgebildet, ein der ermittelten Startzeit entsprechendes Startsignal für den Beginn der Durchführung des führerlosen Überführens an das Kraftfahrzeug über das Kommunikationsnetzwerk zu senden.

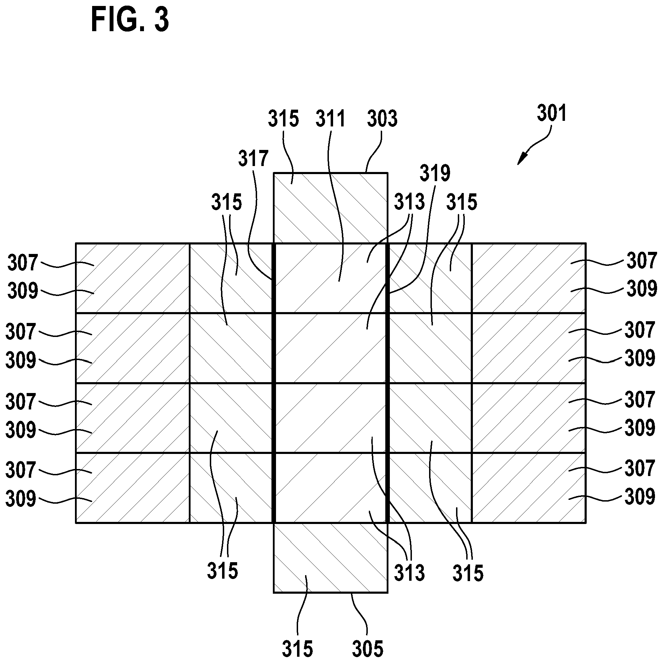

Fig. 3 zeigt einen Parkplatz 301 für Kraftfahrzeuge.

Der Parkplatz 301 umfasst eine Einfahrt 303 und eine der Einfahrt 303 gegenüberliegende Ausfahrt 305.

Eine Fahrspur 311 führt von der Einfahrt 303 zur Ausfahrt 305. Die Fahrspur 311 ist mittels zweier Linien 317, 319 von der Umgebung abgegrenzt.

Der Parkplatz 301 weist mehrere Stellplätze 307 auf.

Der Parkplatz 301 ist in Kacheln wie folgt unterteilt:
Es sind Kacheln 309 vorgesehen, die in ihren Abmessungen den Abmessungen der Stellplätze 307 entsprechen.

Ferner sind Kacheln 313 vorgesehen, die eine Breite der Fahrspur 311 aufweisen und eine Länge aufweisen, die zwischen 0,75 m und 1,5 m liegt. Zum Beispiel beträgt die Länge dieser Kacheln 313 1 m.

Ferner sind Kacheln 315 vorgesehen, die Bereiche des Parkplatzes 301 unterteilen, die weder zur Fahrspur 311 noch zu den Stellplätzen 307 gehören.

Somit ist also der Parkplatz 301 in mehrere Kacheln 309, 313 und 315 unterteilt.

Der Parkplatz 301 umfasst eine Vorrichtung zum Steuern eines Verkehrs innerhalb eines Parkplatzes. Es wurde der Übersicht halber davon abgesehen, eine solche Vorrichtung explizit in die Fig. 3 einzuzeichnen.

Innerhalb des Parkplatzes 301 sind mehrere Umfeldsensoren angeordnet, die die Kacheln 309, 313, 315 erfassen, also überwachen. Diese Umfeldsensoren sind der Übersicht halber ebenfalls nicht gezeigt.

Entsprechend kann dann der Prozessor der nicht gezeigten Vorrichtung basierend auf dieser Überwachung einen Belegungszustand der Kacheln 309, 313, 315 ermitteln und basierend auf den ermittelten Belegungszuständen, wie vorstehend oder nachstehend beschrieben, einen Verkehr innerhalb des Parkplatzes 301 steuern.

Das erfindungsgemäße Konzept sieht also insbesondere vor, einen Parkplatz in mehrere Kacheln zu unterteilen, um einen Verkehr innerhalb des Parkplatzes zu steuern.

Das heißt also, dass ein Raum, zum Beispiel Fahrwege und/oder Stellplätze, des Parkplatzes in feste Kacheln, die auch als Zonen oder Grids bezeichnet werden können, aufgeteilt wird. Der Parkplatz wird also zum Beispiel schachbrettförmig in Kacheln unterteilt.

Eine Kachel ist zum Beispiel ein Rechteck mit einer Länge von 1 m und einer Breite einer Fahrspur. Eine Kachel ist zum Beispiel ein Stellplatz, insbesondere eine Parkbucht.

Nach einer Ausführungsform weisen alle Kacheln die gleichen Ausmaße auf.

In einer anderen Ausführungsform weisen die Kacheln unterschiedliche Ausmaße auf.

Beispielsweise weisen die Kacheln eine Rechteck- oder Quadratform auf. Beispielsweise weisen die Kacheln eine Kreisform auf.

Insbesondere eine Rechteck- respektive Quadratform weist den Vorteil auf, dass hier effizient Rechenzeit eingespart werden kann, wenn Berechnungen für die Steuerung des Verkehrs durchgeführt werden.

Diese Kacheln werden also erfindungsgemäß zum Beispiel kontinuierlich, also regelmäßig, dahingehend überwacht, ob sich Objekte innerhalb der Kacheln befinden.

Für eine Planung, also insbesondere für eine Steuerung, des Verkehrs innerhalb des Parkplatzes werden nach einer Ausführungsform nur die Informationen betreffend den Belegungszustand verwendet.

Ein Belegungszustand gibt also an, ob die Kachel belegt oder unbelegt, also frei, ist.

Vorzugsweise werden für die Steuerung des Verkehrs nicht ein Objekttyp oder eine Position des Objekts innerhalb des Parkplatzes verwendet. Insbesondere werden keine Metadaten verwendet. Metadaten sind zum Beispiel Abmessungen, also Größe und/oder Höhe und/oder Länge, eines Kraftfahrzeugs.

Nach einer Ausführungsform werden Bewegungsprofile der Objekte in den Kacheln ermittelt und für die Steuerung des Verkehrs verwendet. Das heißt also zum Beispiel, dass eine Bewegung über die Zeit prädiziert wird. Zum Beispiel wird ermittelt, wann eine momentan belegte Kachel wieder frei sein wird.

Das heißt also, dass für einen momentanen Belegungszustand (frei oder belegt) ermittelt wird, wann sich dieser mit einer vorbestimmten Wahrscheinlichkeit ändern wird.

In einer anderen Ausführungsform werden historische Belegungszustände, die zusätzlich die Information umfassen, wann und mit welcher Wahrscheinlichkeit eine Kachel zukünftig belegt oder frei ist, für die Steuerung des Verkehrs verwendet. Zum Beispiel geben solche historischen Belegungszustände an, dass an einem bestimmten Tag, zum Beispiel am Samstagmorgen, eine Tür, die sich in unmittelbarer Nachbarschaft zu einer bestimmten Zone (zu einer bestimmten Kachel) innerhalb des Parkplatzes befindet, mit einer bestimmten Wahrscheinlichkeit geöffnet wird, insbesondere mit einer bestimmten Frequenz geöffnet und geschlossen wird.

Wesentliche Vorteile des erfindungsgemäßen Konzepts sind insbesondere in einer Vereinfachung der Berechnungen zu sehen, insofern zum Beispiel nur Anwesenheiten von Objekten (Belegungszustand der Kacheln), aber keine Abstände zwischen den Objekten und auch keine Positionen der Objekte berechnet werden müssen.

Insbesondere kann dadurch eine Vielzahl an Sensortechnologien, zum Beispiel Lichtschranken und/oder Drucksensoren, für die Überwachung der Kacheln verwendet werden.

## Patentansprüche

1. Verfahren zum Steuern eines Verkehrs innerhalb eines Parkplatzes (301), umfassend die folgenden Schritte:
- Unterteilen (101) des Parkplatzes (301) in mehrere Kacheln (309, 313, 315),
- Erfassen (103) der mehreren Kacheln (309, 313, 315) mittels eines oder mehrerer Umfeldsensoren, um der Erfassung entsprechende Umfeldsensordaten zu ermitteln,
- Ermitteln (105) eines jeweiligen Belegungszustands der mehreren Kacheln (309, 313, 315) basierend auf den Umfeldsensordaten,
- Steuern (107) eines Verkehrs innerhalb des Parkplatzes (301) basierend auf den ermittelten Belegungszuständen,
- wobei basierend auf den Umfeldsensordaten ein jeweiliger Belegungszustand einer oder mehrerer der Kacheln (309, 313, 315) prädiziert wird, wobei der Verkehr ferner basierend auf dem jeweiligen prädizierten Belegungszustand gesteuert wird,
- wobei das Prädizieren eines jeweiligen Belegungszustands einer oder mehrerer der Kacheln umfasst, dass bei einer momentan belegten Kachel ermittelt wird, wann diese wieder frei sein wird, wobei der Zeitpunkt, an dem eine momentan belegte Kachel wieder frei sein wird, dann für das Steuern des Verkehrs verwendet wird,
- wobei das Prädizieren eines jeweiligen Belegungszustands einer oder mehrerer der Kacheln umfasst, dass bei einer momentan freien Kachel ermittelt wird, wann diese wieder belegt sein wird, wobei der Zeitpunkt, an dem eine momentan freie Kachel wieder belegt sein wird, dann für das Steuern des Verkehrs verwendet wird.

2. Verfahren nach Anspruch 1, wobei der eine oder die mehreren Umfeldsensoren einen oder mehrere Umfeldsensoren eines sich innerhalb des Parkplatzes (301) befindenden Kraftfahrzeugs und/oder einen oder mehrere Umfeldsensoren des Parkplatzes (301) umfassen.

3. Verfahren nach einem der vorherigen Ansprüche, wobei der Verkehr ferner basierend auf einem jeweiligen historischen Belegungszustand einer oder mehrerer der Kacheln (309, 313, 315) gesteuert wird, der jeweils einen Belegungszustand der entsprechenden Kachel (309, 313, 315) in der Vergangenheit angibt.

4. Verfahren nach einem der vorherigen Ansprüche, wobei das Steuern des Verkehrs frei von einer Verwendung von einem oder mehreren der folgenden Parameter ist: Metadaten, insbesondere Höhe und/oder Breite und/oder Länge und/oder Typ, eines erfassten Kraftfahrzeugs, Typ eines erfassten Objekts, Abstand zwischen zwei erfassten Objekten.

5. Verfahren nach einem der vorherigen Ansprüche, wobei der Verkehr ausschließlich basierend auf jeweiligen Belegungszuständen der Kacheln (309, 313, 315) gesteuert wird.

6. Verfahren nach einem der vorherigen Ansprüche, wobei eine oder mehrere (313) der Kacheln (309, 313, 315) jeweils eine Breite einer Fahrspur (311) des Parkplatzes (301) aufweisen.

7. Verfahren nach einem der vorherigen Ansprüche, wobei eine oder mehrere (309) der Kacheln (309, 313, 315) jeweils einem Stellplatz (307), insbesondere einer Parkbucht, entsprechen.

8. Verfahren nach einem der vorherigen Ansprüche, wobei die Kacheln (309, 313, 315) jeweils eine der folgenden Formen aufweisen: Quadrat, Rechteck, Kreis, Ellipse.

9. Verfahren nach einem der vorherigen Ansprüche, wobei eine jeweilige Größe der Kacheln (309, 313, 315) abhängig von einem oder von mehreren der folgenden Parameter ausgewählt wird: Anzahl an Umfeldsensoren, Detektionsgenauigkeit des oder der Umfeldsensoren, Objektgeschwindigkeit eines erfassten Objekts.

10. Verfahren nach einem der vorherigen Ansprüche, wobei das Steuern des Verkehrs eine oder mehrere der folgenden Aktionen umfasst: Fernsteuern eines Kraftfahrzeugs, Ermitteln einer von einem Kraftfahrzeug autonom abzufahrenden Soll-Trajektorie und Senden der ermittelten Soll-Trajektorie an das Kraftfahrzeug, Steuern eines Signalgebers und/oder einer Schranke des Parkplatzes (301), Ermitteln einer Startzeit für eine Durchführung eines führerlosen Überführens eines Kraftfahrzeugs von einer Startposition innerhalb des Parkplatzes (301) zu einer Zielposition innerhalb des Parkplatzes (301).

11. Vorrichtung (201) zum Steuern eines Verkehrs innerhalb eines Parkplatzes (301), wobei die Vorrichtung (201) ausgebildet ist, das Verfahren nach einem der vorherigen Ansprüche durchzuführen.

12. Parkplatz (301) für Kraftfahrzeuge, umfassend die Vorrichtung (201) nach Anspruch 11.

13. Computerprogramm, umfassend Programmcode zur Durchführung des Verfahrens nach einem der Ansprüche 1 bis 10, wenn das Computerprogramm auf einem Computer ausgeführt wird.

## Claims

1. Method for controlling traffic within a car park (301), comprising the following steps:
- subdividing (101) the car park (301) into a plurality of tiles (309, 313, 315),
- detecting (103) the plurality of tiles (309, 313, 315) by means of one or a plurality of environment sensors in order to determine environment sensor data corresponding to the detection,
- determining (105) a respective occupancy state of the plurality of tiles (309, 313, 315) on the basis of the environment sensor data,
- controlling (107) traffic within the car park (301) on the basis of the determined occupancy states,
- wherein a respective occupancy state of one or a plurality of the tiles (309, 313, 315) is predicted on the basis of the environment sensor data, wherein the traffic is furthermore controlled on the basis of the respective predicted occupancy state,
- wherein predicting a respective occupancy state of one or a plurality of the tiles comprises determining, for a currently occupied tile, when the latter will be free again, wherein the point in time at which a currently occupied tile will be free again is then used for controlling the traffic,
- wherein predicting a respective occupancy state of one or a plurality of the tiles comprises determining, for a currently free tile, when the latter will be occupied again, wherein the point in time at which a currently free tile will be occupied again is then used for controlling the traffic.

2. Method according to Claim 1, wherein the one or the plurality of environment sensors comprises one or a plurality of environment sensors of a motor vehicle situated within the car park (301) and/or one or a plurality of environment sensors of the car park (301).

3. Method according to any of the preceding claims, wherein the traffic is furthermore controlled on the basis of a respective historical occupancy state of one or a plurality of the tiles (309, 313, 315), which indicates in each case an occupancy state of the corresponding tile (309, 313, 315) in the past.

4. Method according to any of the preceding claims, wherein controlling the traffic is free of a use of one or more of the following parameters: metadata, in particular height and/or width and/or length and/or type, of a detected motor vehicle, type of a detected object, distance between two detected objects.

5. Method according to any of the preceding claims, wherein the traffic is controlled exclusively on the basis of respective occupancy states of the tiles (309, 313, 315).

6. Method according to any of the preceding claims, wherein one or a plurality (313) of the tiles (309, 313, 315) each have a width of a lane (311) of the car park (301) .

7. Method according to any of the preceding claims, wherein one or a plurality (309) of the tiles (309, 313, 315) each correspond to a parking space (307), in particular a parking bay.

8. Method according to any of the preceding claims, wherein the tiles (309, 313, 315) each have one of the following shapes: square, rectangle, circle, ellipse.

9. Method according to any of the preceding claims, wherein a respective size of the tiles (309, 313, 315) is selected depending on one or more of the following parameters: number of environment sensors, detection accuracy of the environment sensor(s), object speed of a detected object.

10. Method according to any of the preceding claims, wherein controlling the traffic comprises one or more of the following actions: remotely controlling a motor vehicle, determining a target trajectory to be driven along autonomously by a motor vehicle and transmitting the determined target trajectory to the motor vehicle, controlling a signal generator and/or a barrier of the car park (301), determining a starting time for carrying out a driverless transfer of a motor vehicle from a starting position within the car park (301) to a target position within the car park (301).

11. Device (201) for controlling traffic within a car park (301), wherein the device (201) is designed to carry out the method according to any of the preceding claims.

12. Car park (301) for motor vehicles, comprising the device (201) according to Claim 11.

13. Computer program, comprising program code for carrying out the method according to any of Claims 1 to 10 when the computer program is executed on a computer.

## Revendications

1. Procédé permettant de commander une circulation à l'intérieur d'un parc de stationnement (301), comprenant les étapes suivantes consistant à :
- diviser (101) le parc de stationnement (301) en plusieurs carreaux (309, 313, 315),
- détecter (103) les plusieurs carreaux (309, 313, 315) au moyen d'un ou de plusieurs capteurs d'environnement pour déterminer la détection de données de capteur d'environnement correspondantes,
- déterminer (105) un état d'occupation respectif des plusieurs carreaux (309, 313, 315) sur la base des données de capteur d'environnement,
- commander (107) une circulation à l'intérieur du parc de stationnement (301) sur la base des états d'occupation déterminés,
- dans lequel, sur la base des données de capteur d'environnement, un état d'occupation respectif d'un ou de plusieurs des carreaux (309, 313, 315) est prédit, la circulation étant en outre commandée sur la base de l'état d'occupation prédit respectif,
- dans lequel la prédiction d'un état d'occupation respectif d'un ou de plusieurs des carreaux comprend la détermination pour un carreau actuellement occupé du moment où il sera à nouveau libre, dans lequel le moment où un carreau actuellement occupé sera à nouveau libre sera ensuite utilisé pour commander la circulation,
- dans lequel la prédiction d'un état d'occupation respectif d'un ou de plusieurs des carreaux comprend la détermination pour un carreau actuellement libre du moment où il sera à nouveau occupé, dans lequel le moment où un carreau actuellement libre sera à nouveau occupé sera ensuite utilisé pour commander la circulation.

2. Procédé selon la revendication 1, dans lequel ledit un ou les plusieurs capteurs d'environnement comprennent un ou plusieurs capteurs d'environnement d'un véhicule automobile se trouvant à l'intérieur du parc de stationnement (301) et/ou un ou plusieurs capteurs d'environnement du parc de stationnement (301).

3. Procédé selon l'une quelconque des revendications précédentes, dans lequel la circulation est en outre commandée sur la base d'un état d'occupation historique respectif d'un ou de plusieurs des carreaux (309, 313, 315), qui indique respectivement un état d'occupation du carreau (309, 313, 315) correspondant dans le passé.

4. Procédé selon l'une quelconque des revendications précédentes, dans lequel la commande de la circulation est exempte de toute utilisation d'un ou de plusieurs des paramètres suivants : de métadonnées, en particulier de la hauteur et/ou de la largeur et/ou de la longueur et/ou du type, d'un véhicule automobile détecté, du type d'un objet détecté, d'une distance entre deux objets détectés.

5. Procédé selon l'une quelconque des revendications précédentes, dans lequel la circulation est commandée exclusivement sur la base des états d'occupation respectifs des carreaux (309, 313, 315).

6. Procédé selon l'une quelconque des revendications précédentes, dans lequel un ou plusieurs (313) des carreaux (309, 313, 315) présentent respectivement une largeur d'une voie de circulation (311) du parc de stationnement (301).

7. Procédé selon l'une quelconque des revendications précédentes, dans lequel un ou plusieurs (309) des carreaux (309, 313, 315) correspondent respectivement à un emplacement (307), en particulier à une place de parking.

8. Procédé selon l'une quelconque des revendications précédentes, dans lequel les carreaux (309, 313, 315) présentent respectivement l'une des formes suivantes : carré, rectangle, cercle, ellipse.

9. Procédé selon l'une quelconque des revendications précédentes, dans lequel une dimension respective des carreaux (309, 313, 315) est sélectionnée en fonction d'un ou de plusieurs des paramètres suivants : du nombre de capteurs d'environnement, de la précision de détection du ou des capteurs d'environnement, de la vitesse d'objet d'un objet détecté.

10. Procédé selon l'une quelconque des revendications précédentes, dans lequel la commande de la circulation comprend une ou plusieurs des actions suivantes : télécommander un véhicule automobile, déterminer une trajectoire de consigne à parcourir de manière autonome par un véhicule automobile, et envoyer la trajectoire de consigne déterminée au véhicule automobile, commander un générateur de signal et/ou une barrière du parc de stationnement (301), déterminer une heure de début pour une exécution d'un transfert sans conducteur d'un véhicule automobile d'une position de départ à l'intérieur du parc de stationnement (301) à une position cible à l'intérieur du parc de stationnement (301).

11. Dispositif (201) permettant de commander une circulation à l'intérieur d'un parc de stationnement (301), dans lequel le dispositif (201) est réalisé pour exécuter le procédé selon l'une quelconque des revendications précédentes.

12. Parc de stationnement (301) pour véhicules automobiles, comprenant le dispositif (201) selon la revendication 11.

13. Programme informatique, comprenant du code programme pour exécuter le procédé selon l'une quelconque des revendications 1 à 10 lorsque le programme informatique est exécuté sur un ordinateur.
